# EUROPÄISCHE PATENTSCHRIFT

(11) **EP 3 009 249 B1**
(45) Veröffentlichungstag und Bekanntmachung des Hinweises auf die Patenterteilung: **21.11.2018**
(21) Anmeldenummer: 15176972.6
(22) Anmeldetag: 16.07.2015
(51) Int. Cl.: B29C 45/16

(54) **VERFAHREN ZUM HERSTELLEN EINES HYBRID-VERBUNDBAUTEILS AUS ORGANOBLECHEN UND EINEM METALLISCHEN VERSTÄRKUNGSELEMENT**
METHOD FOR PRODUCING A HYBRID COMPOSITE COMPONENT FROM ORGANOSHEETS AND A METALLIC REINFORCING ELEMENT
PROCEDE DE FABRICATION D'UN COMPOSITE HYBRIDE A PARTIR DE FEUILLES ORGANIQUES ET D'UN ELEMENT DE RENFORT METALLIQUE

(30) Priorität: 17.10.2014 DE 102014221165
(43) Veröffentlichungstag der Anmeldung: 20.04.2016
(73) Patentinhaber: Magna Seating (Germany) GmbH, 63877 Sailauf (DE)
(72) Erfinder: PREISSER, David, 64658 Fürth (DE)
(74) Vertreter: Völger, Silke Beatrix

(56) Entgegenhaltungen:
- DE-A1-102010 014 510
- DE-A1-102011 111 745

## Beschreibung

Die vorliegende Erfindung betrifft ein Verfahren zum Herstellen eines Hybrid-Verbundbauteils aus Organoblechen und einem metallischen Verstärkungselement.

Im Kraftfahrzeuginnenraum sind eine Vielzahl von Strukturbauteilen aus Metall, sowie Bauteile aus spritzgegossenen Materialien bekannt. Um einerseits Gewicht einzusparen und andererseits aber die notwendige Festigkeit zu erzielen, werden als Leichtbauteile sogenannte Hybridbauteile eingesetzt, die einen Kunststoffkörper und formschlüssig eingebundene metallische Verstärkungselemente aufweisen. Weiterhin sind auch Hybridbauteilen aus spritzgegossenen Kunststoffmaterialien bekannt, bei denen an stark beanspruchten Stellen Zuschnitte aus sogenanntem Organoblech als Verstärkungen eingebettet sind. Als Organoblech wird dabei ein mit einem thermoplastischen Kunststoff umschlossenes textiles Flächengebilde bezeichnet. Insbesondere kann es sich bei dem Flächengebilde um ein Gewebe, Gelege oder Vlies aus Natur, Kohlenstoff-, Glas- oder Mineralfasern handeln. Falls für die Umspritzung des Organoblechs ein zu der Matrix des Organoblechs stofflich identischer oder ähnlicher thermoplastischer Kunststoff verwendet wird, lässt sich beim Spritzgießen eine stoffschlüssige Verbindung zwischen dem Organoblech und dem umgebenden Kunststoffmaterial erreichen. Gegenüber einem reinen Metallbauteil ergibt der Einsatz von Hybridbauteilen häufig eine Gewichtseinsparung.

Unter einer stoffschlüssigen Verbindung ist eine Verbindung zu verstehen, bei der die Verbindungspartner durch atomare oder molekulare Kräfte zusammengehalten werden. Es handelt sich um eine nicht lösbare Verbindung, die sich nur durch Zerstörung der Verbindungsmittel trennen lässt.

Einige Bauteile bzw. Funktionselemente im Kraftfahrzeuginnenraum müssen aufgrund des Einsatzortes, der Funktion und der an dem Bauteil auftretenden Belastungen zumindest partiell aus einem metallischen Werkstoff hergestellt werden, bzw. es wird eine metallische Verstärkung benötigt. Bei einem Bauteil aus einem Organoblech, welches durch ein metallisches Bauteil verstärkt werden muss oder welches an ein metallisches Bauteil angebunden werden muss, muss eine sichere Verbindung hergestellt werden, die insbesondere auch in dem Bereich der Anbindung höhere Kräfte aufnehmen/übertragen muss. Als Beispiel für eine derartige Anbindung/Verbindung kann im Bereich des Kraftfahrzeugsitzes der Lehnenversteller genannt werden, der aufgrund der auftretenden und aufzunehmenden Kräfte oder aufgrund der Bauweise des Verstellers und der daraus sich ergebenden Verbindungstechnologie aus einem metallischen Material gefertigt ist. Der Lehnenversteller kann dann an einem aus einem Organoblech bestehenden Rahmen der Sitzstruktur angebunden werden. Eine derartige Hybrid-Verbindung wird üblicherweise derart hergestellt, dass ein metallisches Verstärkungselement auf ein Organoblech gelegt und die Verbindung durch ein Umspritzen mit einem thermoplastischen Kunststoffmaterial vermittelt wird.

Aus der DE 10 2012 218 711 A1 ist ein Verfahren zum Herstellen eines Mehrschicht-Formteils in Hybridbauweise aus mindestens einem Organoblech und einem mit diesem lastfest verbundenen Metallblech bekannt. Hierbei werden die Metall- und Organobleche im unverformten und nicht verbundenen Zustand in ein Umformwerkzeug eingelegt und in diesem im erwärmten Zustand umgeformt, wobei die Metall- und Organobleche flächig miteinander verbunden werden.

Weiterhin ist aus der DE 10 2009 016 177 A1 ein Verbundbauteil für Innenraumverkleidungselemente von Kraftfahrzeugen und ein Verfahren zu dessen Herstellung bekannt. Zur Herstellung des Verbundbauteils werden eine Dekorlage und eine Faserverbundkunststoffplatte in ein Spritzgusswerkzeug eingelegt. Nach einem Fügeprozess der Dekorlage und der Faserverbundplatte zu einem halbzeugartigen Doppellagenteil wird in einem nachfolgenden Schritt ein Kunststoffmaterial in eine Kavität zwischen Faserverbundplatte und zugeordneter Formhälfte zur Anformung einer Funktionslage eingespritzt. Hierbei wird ein Anschmelzen des Organoblechs sowie ein Durchströmen des Organoblechs im Bereich von Durchgangsbohrungen bewirkt.

Aus der DE 10 2013 213 711 A1 ist ein Verfahren zur Herstellung eines Strukturbauteils für Kraftfahrzeuge durch Warmumformung eines Organoblechs bekannt. Zur Verstärkung von Bereichen des aus Organoblechs hergestellten Strukturbauteils werden zusätzliche Aufnahmestellen im Organoblech vorgesehen, die nach der Warmumformung des Organoblechs mit thermoplastischem Material zugespritzt werden.

Aus der DE102011111745A1 ist ein Verfahren zur Herstellung von sandwichartigen Bauteilen bekannt. Dabei werden metallische Einleger mit Organoblechen über eine Schweißschicht verbunden.Aus der DE 102010014510 A1 ist ein Türträger bekannt, der einen Metallelement enthält, das zumindest teilweise mit Kunststoff versehen ist.

Aufgabe der vorliegenden Erfindung ist es ein Verfahren zum Herstellen eines Hybrid Verbundbauteils aus Organoblechen und einem metallischen Verstärkungselement derart weiterzubilden, dass das Verfahren kostengünstig und einfach realisierbar ist und das Hybrid Verbundbauteil ein möglichst geringes Gewicht aufweist sowie höhere Kräfte aufnehmen kann.

Diese Aufgabe wird durch die im Anspruch 1 angegebenen Merkmale gelöst.

Durch die im Anspruch 1 angegebenen Merkmale wird ein Verfahren angegeben, welches einfach realisierbar ist und mit welchem ein Hybrid Verbundbauteil herstellbar ist, welches ein geringes Gewicht aufweist und wobei die Bauteilverbindung höhere Kräfte aufnehmen kann.

Durch die sandwichartige Einbindung des metallischen Verstärkungselements zwischen den Organoblechen 2a, 2b befindet sich das metallische Verstärkungselement in der neutralen Fase des Hybrid Verbundbauteils. Wie es aus dem Prinzip des Kragbalkens bekannt ist, treten die höchsten Spannungen im Randbereich des Bauteilquerschnitts auf. Auftretende Spannungsspitzen können demnach bei der erfindungsgemäßen Ausführung des Hybrid-Verbundbauteils durch die höherfesten Organobleche besser aufgenommen werden.

Weitere vorteilhafte Ausgestaltungen und Weiterbildungen des erfindungsgemäßen Verfahrens zum Herstellen eines Hybrid Verbundbauteils aus Organoblech Strukturbauteilen und einem metallischen Verbindungselement ergeben sich aus den Unteransprüchen.

Bevorzugte Ausführungsformen werden nachfolgend beispielshalber beschrieben, wobei veranschaulichend auf die beigefügten Zeichnungen Bezug genommen wird.

Es zeigen:
- Fig. 1: ein Verbundbauteil von Organoblechen und einem metallischen Verstärkungselement gemäß dem Stand der Technik,
- Fig. 2: ein Verbundbauteil von Organoblechen und einem metallischen Verstärkungselement hergestellt gemäß dem erfindungsgemäßen Verfahren,
- Fig. 3: eine schematische Schnittdarstellung durch eine geöffnete Werkzeugform mit eingelegten Organoblechen,
- Fig. 4: eine schematische Schnittdarstellung durch eine geöffnete Werkzeugform in einem nächsten Verfahrensschritt mit eingelegtem metallischen Verstärkungselement,
- Fig. 5: eine schematische Schnittdarstellung durch eine geschlossene Werkzeugform in einem weiteren Verfahrensschritt; und
- Fig. 6: eine schematische Schnittdarstellung durch eine geschlossene Werkzeugform in einem weiteren Verfahrensschritt beim Einspritzen mit Spritzgussmaterial.

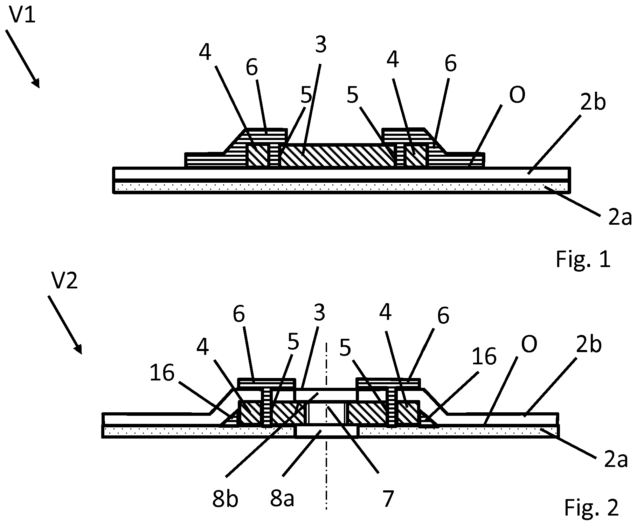

Figur 1 zeigt in einer Schnittdarstellung ein nach dem Stand der Technik hergestelltes Hybrid-Verbundbauteil V1 aus Organoblechen 2a, 2b und einem metallischen Verstärkungselement 3. Hierbei sind zwei plattenförmige erste und zweite Organobleche 2a, 2b übereinanderliegend angeordnet, wobei diese in einem vorangehenden Verfahrensschritt stoffschlüssig miteinander verbunden sind. Auf einem Oberflächenbereich O des ersten Organoblechs 2b liegt ein metallisches Verstärkungselement 3 auf. Das metallische Verstärkungselement 3 weist erste und zweite Endbereiche 4 auf, in die Durchgangsbohrungen 5 eingebracht sind. Die auf dem Oberflächenbereich des ersten Organoblechs aufliegenden Endbereiche 4 sind mit einem Kunststoffmaterial 6 umspritzt. Hierdurch ergibt sich eine stoffschlüssige Verbindung zwischen Kunststoffmaterial 6 und den verbundenen Organoblechen 2a, 2b, sowie eine formschlüssige Verbindung zwischen metallischem Verstärkungselement 3, den Organoblechen 2a, 2b und dem Kunststoffmaterial 6. Die formschlüssige Verbindung zwischen Endbereichen 4 des metallischen Verstärkungselements 3 und dem Kunststoffmaterial 6 wird zusätzlich durch in die Endbereiche 4 des metallischen Verstärkungselements 3 eingebrachte Durchgangsbohrungen 5 verbessert. Die Durchgangsbohrungen 5 werden bei dem Verfahrensschritt des Umspritzens mit dem Kunststoffmaterial gefüllt. Hierdurch erfolgt im Bereich der Durchgangsbohrungen 5 eine zusätzliche Verankerung/stoffschlüssige Verbindung zwischen Kunststoffmaterial 6 und den verbundenen Organoblechen 2a, 2b an dem der Durchgangsbohrungen zugwandten Oberflächenbereichs O des ersten Organoblechs 2b.

Fig. 2 zeigt in einer Schnittdarstellung ein nach dem erfindungsgemäßen Verfahren hergestelltes Verbundbauteil V2 aus zwei Organoblechen 2a, 2b und einem metallischen Verstärkungselement 3. Das metallische Verstärkungselement 3 ist bei der erfindungsgemäßen Ausführungsform zwischen den Organoblechen 2a, 2b sandwichartig eingebettet. Das metallische Verstärkungselement 3 weist erste und zweite Endbereiche 4 auf, in die Durchgangsbohrungen 5 eingebracht sind. Weiterhin ist in das Verstärkungselement 3 eine Durchgangsbohrung 7 eingebracht. Mittels der Durchgangsbohrung 7 ist eine Schraubenverbindung zu einem anzubindenden weiteren Bauteil möglich. Wie es weiterhin aus der Figur 2 ersichtlich ist, sind fluchtend zu der Durchgangsbohrung 7 Durchgangsbohrungen 8 in den Organoblechen 2a, 2b angeordnet. Die beschriebene Anbindungsmöglichkeit mittels einer Schraubenverbindung kann auch durch alternative Ausführungsformen realisiert sein. Beispielsweise könnte an das metallische Verstärkungselement eine Öse oder dergleichen angespritzt sein.

Das metallische Element 3 wird durch den Formschluss mit dem durch das Einspritzen in die Durchgangsbohrungen 5 eingebrachte Kunststoffmaterial 6 und den zwei Organoblechen2a, 2b gehalten. Das Kunststoffmaterial durchströmt beim Einspritzen das Organoblech 2b im Bereich der Anzahl Durchgangsbohrungen 5 und füllt diese, wobei es auf die Oberfläche O des Organoblechs 2a trifft. Dabei entsteht eine stoffschlüssige Verbindung zwischen den Organoblechen 2a, 2b und dem Kunststoffmaterial 6.

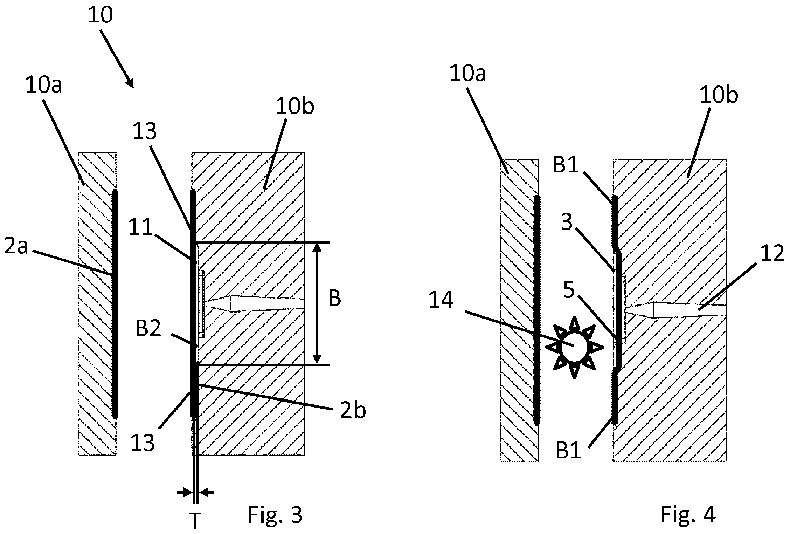

Das erfindungsgemäße Verfahren zur Herstellung eines Hybrid-Verbundbauteils V2 aus Organoblechen 2a, 2b und einem metallischen Verstärkungselement 3 wird nachfolgend anhand der Figuren 3-6 näher beschrieben.

Als Organoblech wird dabei ein mit einem thermoplastischen Kunststoff umschlossenes textiles Flächengebilde bezeichnet. Insbesondere kann es sich bei dem Flächengebilde um ein Gewebe, Gelege oder Vlies aus Natur, Kohlenstoff-, Glas- oder Mineralfasern handeln. Die in den Zeichnungen gezeigten Organobleche sind der Einfachheit halber als plattenförmige Elemente dargestellt. Sie können allerdings auch andere Ausgestaltungen/Formgebungen besitzen. Die Herstellung derartiger Organobleche ist bekannt und wird nicht näher beschrieben.

Der in den Figuren gezeigte Ausschnitt der Werkzeugform 10 einer Spritzgießmaschine besteht im Wesentlichen aus einer oberen Formhälfte 10a und einer unteren Formhälfte 10b, die in den ersten Verfahrensschritten zunächst in einer geöffneten Stellung der Werkzeugform 10 (Figuren 3 und 4) beabstandet zueinander angeordnet sind. Die Formhälfte 10b wird nachfolgend auch als anspritzseitige Formhälfte bezeichnet und weist einen ersten Bereich B1 und einen eine Vertiefung aufweisenden zweiten Bereich B2 auf. Der Übergang zwischen dem ersten Bereich B1 und dem zweiten Bereich B2 ist mit einer Fase versehen. Die Vertiefung weist eine Tiefe T auf, die in etwa der Dicke des metallischen Verstärkungselements 3 entspricht. Die Breite B bzw. Länge L der Vertiefung ist korrespondierend zu den Außenabmessungen des metallischen Verstärkungselements 3 ausgeführt. Zwischen den Formhälften 10a, 10b befindet sich in der geschlossenen Stellung der Formhälften eine Kavität 11.

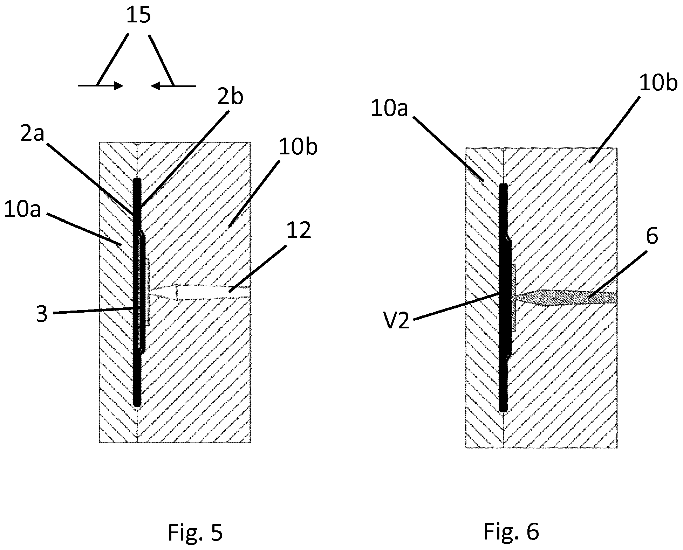

In die Formhälfte 10b sind in dem Bereich B2 eine Anzahl von Bohrungen 12 eingebracht, die ausgehend von einer Zuführbohrung für das Spritzgießmaterial in die Kavität 11 münden. Die Zuführbohrung weist zur Dosierung des Spritzgießmaterials/Kunststoffmaterials Ventile auf. Das Dosiersystem ist allgemein bekannt und wird daher nicht näher beschrieben.
In einem ersten Schritt des erfindungsgemäßen Verfahrens werden zwei plattenförmige Organobleche in entsprechender Formgebung und Größe bereitgestellt und in die Formhälften 10a, 10b eingesetzt und dort lagefixiert. Die Organobleche 2a, 2b sind vorgewärmt und weisen in etwa die Schmelztemperatur des thermoplastischen Matrixwerkstoffes auf. Hierbei kann als Matrixwerkstoff beispielsweise ein Polyamid (PA 6.6) verwendet werden. Die Schmelztemperatur dieses Kunststoffes beträgt 230 Grad Celcius.
Aus der Figur 3 ist ersichtlich, dass in diesem Verfahrensschritt das Organoblech 2a auf dem entsprechenden Oberflächenbereich der Formhälfte 10a aufliegt und das Organoblech 2b mit seinen äußeren Randbereichen 13 auf dem Oberflächenbereich des Bereichs B1 der Formhälfte 10b aufliegt. Im Bereich B2 der Formhälfte 10b weist das Organoblech 2b den Abstand T zu dem Oberflächenbereich der Formhälfte 10b auf.
Anschließend wird in einem nächsten Verfahrensschritt ein plattenförmiges metallisches Verstärkungselement 3 bereitgestellt und auf den zur Formhälfte 10a weisenden Oberflächenbereich des Organoblechs 2a im Bereich B2 gelegt. Das metallische Verstärkungselement 3 weist, wie es bereits zu der Figur 2 beschrieben ist, eine Anzahl von Durchgangsbohrungen 5 sowie die Durchgangsbohrung 7 auf. Aus der Darstellung der Figur 4 ist ersichtlich, dass sich das Organoblech 2b nach dem Einlegen des metallischen Verstärkungselementes 3 in seiner Formgebung der Kontur der Formhälfte 10b im zweiten Bereich B2 anpasst und die zur Formhälfte 10a weisende Oberfläche des metallischen Verstärkungselements 3 fluchtend zu den benachbarten zu der Formhälfte 10b weisenden Oberflächenbereichen des Organoblechs 2b im Bereich B1 angeordnet ist. Es kann aufgrund der Einlegedauer der Organobleche 2a, 2b und des metallischen Verstärkungselements 3 notwendig werden, die Organobleche 2a, 2b und das metallische Verstärkungselement 3 erneut aufzuheizen. Dies kann automatisiert durch einen an einem Roboter montierten Heizstrahler 14 erfolgen.
Nach dem oben genannten Aufheizen werden die Formhälften 10, 10b unter Druck geschlossen. Hierbei wird eine stoffschlüssige Verbindung der Organobleche 2a, 2b in dem Bereich B1 erreicht. In diesem Bereich liegen die Organobleche 2a, 2b mit ihren zugewandten Oberflächenbereichen unmittelbar aufeinander. Dieser Verfahrensschritt ist in der Figur 5 dargestellt. Das Schließen der Werkzeugform ist durch den Pfeil 15 angedeutet. In einem in der Figur 6 abgebildeten nachfolgenden Verfahrensschritt wird in den der Formhälfte 10b zugewandten rückseitigen Bereich des Organobleches 2b in den freigehaltenen Formspalt der Kavität über die Zuführbohrung 12 ein Spritzgießmaterial eingebracht. Das Spritzgießmaterial verteilt sich bei diesem Verfahrensschritt in dem freigehaltenen Formspalt der Kavität 11 im rückseitigen Bereich des Organoblechs 2b und schmilzt den rückseitigen Oberflächenbereich des Organoblechs 2b an. Durch das vorgenannte Aufschmelzen kann das Spritzgießmaterial das Organoblech 2b im Bereich der Durchgangsbohrungen 5 durchströmen und die Anzahl Durchgangsbohrungen 5 des metallischen Verstärkungselements 3 werden befüllt. Das eingespritzte Spritzgießmaterial 6 bzw. die angespritzen, durchströmten Bereiche sind in der Figur 2 in der Schnittdarstellung ersichtlich. Aus dieser Darstellung kann man auch erkennen, dass die Bereiche 16 zwischen der Fase des Organoblech Strukturbauteils 2b und seitlichen Randbereichen des metallischen Verstärkungselements hinterspritzt sind. Das Auffüllen dieser Bereiche vermeidet eine Kerbwirkung.

Nach dem Verfahrensschritt des Spritzgießens kann das Hybrid Verbundbauteil aus der Werkzeugform entnommen werden. Aus der Schnittdarstellung der Figur 2 ist erkennbar, dass das metallische Verstärkungselement 3 zwischen den plattenförmigen Organoblech Strukturbauteilen 2a, 2b eingebettet angeordnet ist und eine zusätzliche formschlüssige Verbindung durch das Spritzgießmaterial im Bereich der Durchgangsbohrungen vermittelt wird.

Als Materialien für die Organobleche 2a, 2b werden insbesondere Polypropylene oder auch Polyamide als Matrixwerkstoff verwendet. Das metallische Verstärkungselement kann aus einem Stahlblech bestehen. Das Spritzgießmaterial ist vorzugsweise ein thermoplastischer Kunststoff, welcher vom Typ her dem Matrixwerkstoff des Organoblechs in seinen chemischen Eigenschaften ähnelt. Beispielhaft könnte eine solche Paarung aus einem Organoblech aus Polypropylen mit Glasfasergewebe und einem Polyethylen GF30 Spritzgussmaterial sein.

## Patentansprüche

1. Verfahren zum Herstellen eines Hybrid Verbundbauteils (V2) aus ersten und zweiten Organoblechen (2a, 2b) und einem metallischen Verstärkungselement (3) welches die folgenden Verfahrensschritte umfasst:
a) Bereitstellen von ersten und zweiten Organoblechen (2a, 2b) sowie eines mit einer Anzahl Durchgangsbohrungen (5) versehenen metallischen Verstärkungselementes (3),
b) Einlegen des ersten Organoblechs (2a) in eine erste Formhälfte (10a) einer Werkzeugform sowie Einlegen des zweiten Organoblechs (2b) in eine zweite Formhälfte (10b) der Werkzeugform, wobei die zweite Formhälfte (10b) die anspritzseitige Formhälfte ist, die einen ersten Bereich B1 und einen eine Vertiefung aufweisenden zweiten Bereich B2 aufweist, und wobei der zweiten Bereich B2 eine Vertiefung aufweist, die eine Tiefe T, eine Breite B und eine Länge L aufweist, und wobei die Abmessungen T, B, L korrespondierend zu den Außenabmessungen des metallischen Verstärkungselements 3 ausgeführt sind,
c) Einlegen des metallischen Verstärkungselements (3) auf einen zur Formhälfte (10a) weisenden Oberflächenbereich des zweiten Organoblechs (2b) im Bereich B2,
d) Schließen der Werkzeugform unter Beaufschlagung eines Drucks, um eine stoffschlüssige Verbindung der Bereiche der Organobleche (2a, 2b) im Bereich B1 zu erreichen, die unmittelbar aufeinanderliegen,
e) Einspritzen eines thermoplastischen Kunststoffmaterials (6) in einen zwischen einem Organoblech (2b) und zugeordneter Formhälfte (10b) freigehaltenen Formspalt, wobei das Kunststoffmaterial (6) ein Anschmelzen des Organoblechs in dem Formspalt zugewandten Oberflächenbereich sowie ein Durchströmen der Organobleche (2a, 2b) im Bereich der Anzahl Durchgangsbohrungen (5) und ein Befüllen der Anzahl Durchgangsbohrungen (5) des metallischen Verstärkungselements (3) bewirkt, wobei eine stoffschlüssige Verbindung zwischen dem Kunststoffmaterial (6) und den Organoblechen (2a, 2b) und eine formschlüssige Verbindung zwischen Kunststoffmaterial (6) den Organoblechen (2a, 2b) und dem metallischen Verstärkungselement (3) bewirkt wird; und
f) Öffnen der Werkzeugform und Herausnehmen des Hybrid Verbundbauteils (V2).

2. Verfahren zum Herstellen eines Hybrid Verbundbauteils (V2) nach Anspruch 1, **dadurch gekennzeichnet, dass** zwischen den Verfahrensschritten c) und d) ein Aufheizen der Organobleche (2a, 2b) sowie des metallischen Verstärkungselements (3) in der Werkzeugform erfolgt.

3. Verfahren zum Herstellen eines Hybrid Verbundbauteils (V2) nach Anspruch 1 oder 2, **dadurch gekennzeichnet, dass** die Organobleche (2a, 2b) ein mit einem thermoplastischen Kunststoff umschlossenes textiles Flächengebilde sind, wobei der Kunststoff Polypropylene oder auch Polyamide sind, und das Flächengebilde ein Gewebe, Gelege oder Vlies aus Natur, oder Kohlenstoff-, oder Glas- oder Mineralfasern ist.

4. Verfahren zum Herstellen eines Hybrid Verbundbauteils (V2) nach Anspruch 3, wobei das Spritzgießmaterial ein Polyethylen GF30 als thermoplastischer Kunststoff ist, und das Organoblech (2a, 2b) aus Polypropylen mit Glasfasergewebe besteht.

5. Verfahren zum Herstellen eines Hybrid Verbundbauteils (V2) nach Anspruch 1, wobei zwischen dem ersten Bereichen B1 und dem zweiten Bereich B2 eine Fase angeordnet ist, und im Verfahrensschritt e) zwischen der Fase des Organoblechs (2b) und seitlichen Randbereichen des metallischen Verstärkungselements (3) Kunststoffmaterial eingespritzt wird.

## Claims

1. Method for producing a hybrid composite component (V2) from first and second organo sheets (2a, 2b) and a metallic reinforcing element (3), comprising the following method steps:
a) providing first and second organo sheets (2a, 2b) and a metallic reinforcing element (3) provided with a number of through-holes (5),
b) inserting the first organo sheet (2a) into a first mould half (10a) of a mould and inserting the second organo sheet (2b) into a second mould half (10b) of the mould, wherein the second mould half (10b) is the injection-side mould half, which comprises a first region B1 and a second region B2 comprising a recess, and wherein the second region B2 comprises a recess which has a depth T, a width B and a length L, and wherein the dimensions T, B, L are embodied in accordance with the external dimensions of the metallic reinforcing element 3,
c) laying the metallic reinforcing element (3) onto a surface region of the second organo sheet (2b) facing the mould half (10a) in the region B2,
d) closing the mould with the application of a pressure, in order to achieve a bonded connection of the regions of the organo sheets (2a, 2b) in the region B1 which lie directly on one another,
e) injecting a thermoplastic (6) into a mould gap kept free between an organo sheet (2b) and associated mould half (10b), wherein the plastics material (6) brings about partial melting of the organo sheet in the surface region facing the mould gap as well as through-flow through the organo sheets (2a, 2b) in the region of the number of through-holes (5) and filling of the number of through-holes (5) in the metallic reinforcing element (3), wherein a bonded connection is brought about between the plastics material (6) and the organo sheets (2a, 2b) and an interlocking connection is brought about between plastics material (6), the organo sheets (2a, 2b) and the metallic reinforcing element (3); and
f) opening the mould and removing the hybrid composite component (V2).

2. Method for producing a hybrid composite component (V2) according to Claim 1, **characterized in that** between method steps c) and d) the organo sheets (2a, 2b) and the metallic reinforcing element (3) are heated in the mould.

3. Method for producing a hybrid composite component (V2) according to Claim 1 or 2, **characterized in that** the organo sheets (2a, 2b) are a textile fabric enclosed in a thermoplastic, wherein the plastic is polypropylene or indeed polyamide, and the fabric is a woven fabric, laid fabric or nonwoven fabric of natural, or carbon, or glass or mineral fibres.

4. Method for producing a hybrid composite component (V2) according to Claim 3, wherein the injection moulding material is a polyethylene GF30 as thermoplastic, and the organo sheet (2a, 2b) consists of polypropylene with glass fibre woven fabric.

5. Method for producing a hybrid composite component (V2) according to Claim 1, wherein a chamfer is arranged between the first regions B1 and the second region B2, and in method step e) plastics material is injected between the chamfer of the organo sheet (2b) and lateral peripheral regions of the metallic reinforcing element (3).

## Revendications

1. Procédé de fabrication d'un composant composite hybride (V2) à partir d'une première et d'une deuxième tôle organique (2a, 2b) et d'un élément renforçant métallique (3), qui comprend les étapes de procédé suivantes :
a) la préparation d'une première et d'une deuxième tôle organique (2a, 2b), ainsi que d'un élément renforçant métallique (3) muni d'un nombre d'alésages de passage (5),
b) la disposition de la première tôle organique (2a) dans une première moitié de moule (10a) d'un moule, et la disposition de la deuxième tôle organique (2b) dans une deuxième moitié de moule (10b) du moule, la deuxième moitié de moule (10b) étant la moitié de moule du côté de l'injection, qui comprend une première zone B1 et une deuxième zone B2 comprenant un creux, la deuxième zone B2 comprenant un creux qui présente une profondeur T, une largeur B et une longueur L, et les dimensions T, B, L étant configurées pour correspondre aux dimensions extérieures de l'élément renforçant métallique (3),
c) la disposition de l'élément renforçant métallique (3) sur une zone de surface orientée vers la moitié de moule (10a) de la deuxième tôle organique (2b) dans la zone B2,
d) la fermeture du moule avec application d'une pression afin d'obtenir une liaison par accouplement de matière des zones des tôles organiques (2a, 2b) dans la zone B1 qui sont directement superposées,
e) l'injection d'un matériau plastique thermoplastique (6) dans un espace de moule maintenu libre entre une tôle organique (2b) et la moitié de moule correspondante (10b), le matériau plastique (6) provoquant une fusion de la tôle organique dans la zone de surface faisant face à l'espace de moule, ainsi qu'un écoulement des tôles organiques (2a, 2b) dans la zone du nombre d'alésages de passage (5) et un remplissage du nombre d'alésages de passage (5) de l'élément renforçant métallique (3), une liaison par accouplement de matière entre le matériau plastique (6) et les tôles organiques (2a, 2b) et une liaison par accouplement de forme entre le matériau plastique (6) des tôles organiques (2a, 2b) et l'élément renforçant métallique (3) étant réalisées ; et
f) l'ouverture du moule et l'extraction du composant composite hybride (V2).

2. Procédé de fabrication d'un composant composite hybride (V2) selon la revendication 1, **caractérisé en ce qu'**entre les étapes de procédé c) et d), un chauffage des tôles organiques (2a, 2b), ainsi que de l'élément renforçant métallique (3) dans le moule a lieu.

3. Procédé de fabrication d'un composant composite hybride (V2) selon la revendication 1 ou 2, **caractérisé en ce que** les tôles organiques (2a, 2b) consistent en une structure textile plate entourée par un plastique thermoplastique, le plastique étant un polypropylène ou également un polyamide, et la structure plate étant un tissu, une nappe ou un non-tissé en fibres naturelles, ou de carbone ou de verre ou minérales.

4. Procédé de fabrication d'un composant composite hybride (V2) selon la revendication 3, dans lequel le matériau de moulage par injection est un polyéthylène GF30 en tant que plastique thermoplastique, et la tôle organique (2a, 2b) est constituée de polypropylène avec un tissu de fibres de verre.

5. Procédé de fabrication d'un composant composite hybride (V2) selon la revendication 1, dans lequel un biseau est agencé entre la première zone B1 et la deuxième zone B2 et, à l'étape de procédé e), le matériau plastique est injecté entre le biseau de la tôle organique (2b) et les zones de bord latérales de l'élément renforçant métallique (3).
